(19) Europäisches Patentamt
European Patent Office
Office européen des brevets

(11) Publication number: **0 097 017 A2**

# (12) EUROPEAN PATENT APPLICATION

(21) Application number: 83303281.6

(22) Date of filing: 07.06.83

(51) Int. Cl.³: **B 22 F 9/04**, C 09 C 1/62

(30) Priority: 07.06.82 US 386050
07.06.82 US 386051

(43) Date of publication of application: 28.12.83
Bulletin 83/52

(84) Designated Contracting States: AT BE DE FR GB IT NL

(71) Applicant: MPD Technology Corporation, 681 Lawlins Road, Wyckoff New Jersey 07481 (US)

(72) Inventor: Osborn, Donald Herbert, 15 Augur Road, Suffern, NY 10901 (US)
Inventor: Basley, Richard John, West Main Street, Stony Point, NY 10980 (US)

(74) Representative: Greenstreet, Cyril Henry et al, Thames House (Fifth floor) Millbank, London SW1P 4QF (GB)

## (54) Production of metal flake.

(57) In making metal flake powder by wet ball milling a powder of the metal (e.g. nickel or stainless steel) in the presence of a lubricant in a mobile liquid system, the use of an organometallic substituted alcohol as the lubricant gives flake having improved reflectivity and/or electrical conductivity. The lubricant is preferably a titanate, e.g. isopropyl tri (dioctylpyrophosphato) titanate.

EP 0 097 017 A2

0097017

Production of Metal Flake

This invention relates to the production of metal flake, and to metal flake having improved properties.

There is a demand for highly reflective metal flake for many purposes, particularly in the production of paints, inks and the like, and also for highly conductive metal flake for applications such as electronic shielding and circuitry.

One way of producing metal flake is by a wet milling process in which metal powder is ball milled in a low viscosity liquid, referred to hereinafter as a mobile liquid, which is then driven off, e.g. by centrifuging and vacuum drying. The liquid is recovered and may, if it is still in satisfactory condition, be reused. A small amount of a lubricant such as a fatty acid may be incorporated in the liquid medium to minimise or prevent welding of the particles being milled.

Thus U.S. Patents Nos. 3 709 439 and 3 941 584 disclose a method of making stain-resistant metals and alloys, including nickel, in the form of flakes which have smooth, specularly reflective surfaces, are bright and lustrous, and are characterised by aesthetic effectiveness in paint films and other applications. U.S. Patents Nos. 3 776 473 and 3 901 688 disclose a method for making highly reflective aluminium flake. Although these processes have been found very satisfactory for producing highly reflective metal flake, it would be an advantage, e.g. for decorative purposes, to improve the reflectivity of the flake still further. A further problem in these known milling processes is that the liquid medium tends to degenerate, which limits its reuse and adds to the cost of processing.

The flake produced with the use of fatty acids as lubricants is essentially non-conductive or poorly conductive. While its conductivity can be

improved by annealing in a reducing atmosphere after drying, the temperatures required are so high that sintering or agglomeration of the flake occurs, thus destroying its usefulness. Lower temperatures at which sintering or agglomeration is prevented are not effective in improving the conductivity.

The present invention is based on the discovery that if the fatty acid used as lubricant in the wet milling of metal powder to flake is replaced by a lubricant comprising an organometallic substituted alcohol, metal flake can be obtained having improved properties, particularly improved reflectivity and/or improved conductivity in the as-dried condition without the need for an annealing treatment. While conductivity can be further improved by an annealing step, this can be carried out at temperatures below the sintering temperature of the flake. In addition, there is less deterioration of the liquid medium, and the flake is produced with high production efficiency and reproducibility.

According to the invention, therefore, metal flake is produced by wet milling a powder of the metal in a mobile liquid system that contains as lubricant an organometallic substituted alcohol that is at least partially soluble in the liquid system, in a small amount effective to inhibit welding of the metal particles.

The organometallic compound preferably comprises in its metal-containing part at least one element having a valency different from that of the metal being milled. The metal of the organometallic compound may, for example, be titanium, zirconium, tantalum, silicon, hafnium, vanadium, lithium, tin or lead. Preferred organometallic compounds are titanates, for example isopropyl tri-(dioctylpyrophosphato) titanate.

$(CH_3)_2CH.O.Ti\ [O.PO(OH).O.PO(O.C_8H_{17})_2]_3$

Metals that can be produced as flake having improved reflectivity include, for example, nickel, copper, cobalt, silver, gold, platinum group metals, aluminium, chromium, tin and specularly reflective alloys thereof, for example stainless steels and nickel alloys such as those described in U.S. Patent No. 3 709 439, namely Ni-Cr and Ni-Cr-Fe alloys, Ni-Cu alloys containing up to 90% Cu, nickel silvers with 15-70% Cu, 10-70% Zn, balance at least 15% Ni, Ni-Co, Ni-Fe, Ni-Sn and Ag-Ni alloys.

Conductive metals that can be produced as flake with improved conductivity include those selected from Groups IB, VIB, IIIA and VIII of the Periodic Table, e.g. nickel, copper, cobalt, aluminium, chromium, silver, gold, platinum group metals and conductive alloys thereof, for example Fe-Ni-Ag and Ni-Cu-Zn (e.g. nickel silver), Cu-Zn (e.g. brass), Cu-Sn (e.g. bronze) alloys.

It is not known exactly how the organometallic lubricants used in accordance with the invention act to improve the properties of the flake produced. However, it is believed that not only is the organic portion of the organometallic compound readily removed from the flake, but the organometallic compound also deposits a non-hydrated metallic oxide on the surface of the flake on which a monolayer of the oxide of the metal develops. The combined deposit of the metal oxide of the organometallic compound and monolayer of non-hydrated metal oxide developed during the milling operation forms either a more stable oxide monolayer on the flake or a ceramic semi-conductive mixed metal oxide of improved reflectivity. Subsequent treatment of the flake in a reducing atmosphere may aid in producing a suitable conductive oxide. Alternatively, the organometallic compound may contribute to developing a flake morphology during

milling which exhibits improved reflectivity and/or conductivity. The invention includes conductive metal flake having on its surface a monolayer of a ceramic mixed metal oxide semi-conductor.

In wet milling powder to flake in accordance with the invention, the lubricant should be present in the mill charge in a small concentration, e.g. of 0.25% or less or even 0.1% or less. The amount of the lubricant required to be effective may be dependent, for example, upon the specific lubricant and the particular metal being milled. While up to 2, 5 or even 10% of lubricant by weight of the metal charge may be present, generally speaking the least amount of lubricant should be used consistent with the desired properties, avoiding unneccesary build-up of lubricant coating on the flake. Preferably the lubricant concentration does not exceed 1%. Advantageously small periodic additions of lubricant are made during the mill run to replace that which is consumed by coating the flakes as they are formed and that which is lost during the operation.

Although the organometallic compounds used are not readily degraded, it is preferred to cool the mill during operation, e.g. by means of a water jacket or by spraying the outside of the mill with water.

It is essential to conduct the milling in a mobile liquid medium. A liquid medium is sufficiently mobile if it is found when the mill is discharged by pouring out its entire contents or on removing one or more balls from it that there is little or no coating of the balls by the powder charge. The mobile liquid is preferably mineral spirits (light liquid hydrocarbons that usually having a specific gravity in the range 0.7 to 0.9), but may be water, isopropanol or other liquid of relatively low viscosity which may readily be

removed from the flake product. Mixtures of mobile liquids may be employed. The liquid should wet the powder and the balls. In general, enough of the mobile liquid is used to at least cover the balls. Typically, the mobile liquid and ball charge will occupy about 60% by volume of the mill, the liquid surface being about 5 cm above the ball charge.

The initial powders can be made by any technique used to make metal powders, and they preferably are as free as possible from oxides and other contaminants, as such material, if not removed, can produce undesirable effects in ultimate applications, e.g. in paint films. The metal and alloy powders should also contain as little as possible of impurities which detrimentally affect malleability, e.g. sulphur, nitrogen, phosphorus and carbon. In some alloys excessive amounts of silicon and/or manganese can detrimentally affect malleability.

Carbonyl nickel powder having an average particle size of about 2 to 7 µm and very low in impurity content is an ideal starting material for conversion to nickel flake in accordance with the invention.

In carrying out the process of the invention, the starting material will normally be a metal powder, usually having a fine particle size, for example, a size such as to pass a screen having openings measuring about 147 µm, preferably having a size such as to pass a screen with 44 µm openings. In converting such powders to flake having aesthetic characteristics, individual powder particles are flattened between impacting grinding balls or between the balls and the wall of the container holding them. In general, it is more important to have small particle size initially with softer powders (compared to nickel), e.g. aluminium or silver powders. Some comminution of the powder results, and with coarser

starting powders, more comminution is necessary to provide a flake product having the thinness, e.g. an average thickness less than about 1 µm, required for aesthetic uses, and to permit suspension in a liquid medium such as a paint.

The flake products provided in accordance with the invention are generally used in coating products. It is often desirable to apply the coating with a spray gun and it is important for the flake to be of such a size that it does not clog the spray gun. To satisfy this requirement the flake product should contain a major proportion of particles having an average thickness less than 1 µm and preferably less than about 0.75 µm or less than about 0.5 µm, with an average dimension across a major flake axis of about 10 to about 80 µm, e.g. about 20 to about 40 µm. For special purposes, such as for use in plastics, larger flakes may be desirable and can be made in accordance with the invention. Thus, flake products containing a major proportion of particles having an average dimension across a major flake axis exceeding 44 to 50 µm and up to e.g. 150 µm, can be produced. For such products, it is preferred to start with metal or alloy powders in the size range passing a 147 µm opening screen but retained on a 44 µm screen. Such larger flake products may be several µm, e.g. up to 3 µm, thick, since such products are intended for use in media which will accept heavier particles.

To obtain flake with suitable morphology for good conductivity as well as improved reflectivity, milling of the metal powder in the mobile liquid medium in the presence of a group of milling or grinding bodies confined in a milling space should be carried with the volume ratio of the liquid medium to the metal powder at least about 10:1, and more preferably at least about 20:1, or even at least about 25:1, e.g.

about 25:1 to about 50:1, and with enough of the liquid medium being present for the interstitial space between grinding bodies at rest in the confined milling space to be substantially completely filled with liquid medium. Lower liquid to powder ratios may be employed but the risk of producing roughened surfaces of lower specular brightness on the flake product is thereby increased. Higher liquid to powder ratios may be employed, but production rate is thereby lowered, which is undesirable economically, and other detrimental effects may be encountered. In general, the processing can be carried out at a wide range of grinding bodies to powder ratio.

As noted in the aforementioned U.S. Patents, the milling can be conducted in a conventional ball mill or in an attritor mill, or in other types of grinding or milling equipment, e.g. vibratory and planetary ball mills, and the term "ball mill" is used generically herein to include mills wherein a charge of grinding balls or otherwise shaped grinding media is confined in a container therefor. While the milling action itself can vary depending upon the particular equipment involved, nevertheless the teachings herein are applicable and enable satisfactory flake products to be produced from stain-resistant and other specularly reflective metals as well as from conductive metals.

For practical purposes, the conventional ball mill is a convenient apparatus to use for the present invention. As is known, the mill comprises a hollow cylindrical container or shell in which is placed a charge of grinding balls, preferably substantially uniform in size and preferably substantially spherical in shape. Usually the volume of the ball charge including the free space therebetween will occupy less than half of the volume of the mill, and when at rest the mobile liquid will at least cover the balls. The mill is rotated about its cylindrical axis at a

rotational speed sufficient to create a cascading and impacting or impinging action in the ball charge. It is desirable to provide a number of lifters fastened to the inner cylindrical wall parallel to the cylindrical axis and extending along the length of the mill so as to reduce slippage of the ball charge against the inner cylindrical mill wall. The effective impacting action of the balls which produces flake occurs in only a limited zone, i.e. the charge zone within which the cascading action of the balls occurs. As the balls are lifted due to rotation of the mill, the mobile liquid is believed to drain therefrom so that most of the liquid and most of the powder being acted upon remains in the lower portion of the mill and is available in the active zone.

The attritor mill (stirred ball mill) is considered to be substantially more active in relation to grinding than the ball mill. The mill comprises an axially vertical stationary cylinder having a rotatable agitator shaft located coaxially of the mill with spaced agitator arms extending substantially horizontally from the shaft. The mill is filled with grinding elements, preferably metal (e.g. steel) balls, usually of substantially uniform size, sufficient to bury at least some of the horizontal arms so that, when the agitator shaft is rotated, the ball charge, by virtue of the arms passing through it, is maintained in a continual state of unrest or relative motion through the bulk thereof during milling. In operating the attritor mill in accordance with the invention the mill tank should be filled with balls to about one or two ball diameters in height above the topmost horizontal agitator arm and the entire free space within the ball charge is filled with the mobile liquid such that the liquid covers the top of the ball charge at rest. The entire ball charge within the attritor mill is considered to be active due to the

motion of the agitator arms therethrough when the mill is in operation. The attritor is preferably run at high speed to reduce the time needed for milling, and with a high ball-to-powder volume ratio, e.g. 25:1 or 30:1 or higher.

After discharge from the mill the flake is separated from the liquid by any technique used for liquid/solid separation. It may be used as a paste or dried. In the production of conductive metal flake the flake may also be subjected to an annealing treatment which includes treatment in a reducing atmosphere at a temperature below the sintering temperature of the metal.

The drying treatment, as distinguished from the anneal, is mainly to remove the mobile liquid. Drying may be carried out in a drying oven, e.g. at about 90°C for the period of time required to remove all or substantially all of the mobile liquid. This is referred to in the examples below as the "as-dried" condition. On a commercial scale a more practical approach to drying is treatment under a slight vacuum at a more elevated temperature, e.g. in the range of about 80°C to 200°C e.g. about 150°C, and cooling under vacuum. A reducing purge may be included, e.g. before or during cooling.

The annealing treatment preferably comprises treatment in a reducing atmosphere at a temperature below the sintering temperature of the metal flake. A hydrogen containing stream, e.g. 95%$N_2$-5%$H_2$, has been found satisfactory. The metal flake can be brought to temperature in a vacuum and cooled under vacuum. For example, it has been found that when using the lubricant of the present invention, the electrical conductivity of nickel flake can be enhanced by an annealing treatment in a 95%$N_2$-5%$H_2$ stream at an elevated temperature e.g. in the range of about 120 to 315°C, e.g. about 230°C. It is noted that while the stability of the flake can be

improved with the anneal, it may be with some sacrifice in reflectivity.

In contrast to this, if an annealing treatment is applied to flake produced with fatty acid lubricants, higher annealing temperatures and longer annealing times are in general required than for flake produced with an organometallic compound of this invention. At temperatures below the sintering temperature of the flake, the conductivity of flake produced with fatty acid lubricants is not significantly enhanced. The use of an organometallic compound as a lubricant allows a substantial reduction in the annealing cycle requirements, thereby reducing the risk of agglomeration. It has been found, for example, that nickel flake can be produced which in the annealed condition has a specific resistivity of less than 1 ohm/sq, and even less than 0.5 ohm/sq, e.g. about 0.2 or less ohm/sq, and the invention includes such powder.

Some examples will now be given.

In these examples, specular reflectance was determined on the as-dried flake by a test comprising forming a water-floated layer of the flake sample to be measured, aiming at the layer a light beam of parallel rays, at an angle of 30° from the vertical, generated by a tungsten filament light source, and measuring the specularly reflected light ($R_s$) from the beam by means of a photocell sensitive in the wavelength range of 300 to 700 µm. While this test is affected to some extent by the absorption characteristics of the material tested, and the photocell can report light values at wavelengths which are outside the visible spectrum, the test nevertheless gives a useful indication of the surface smoothness of metal flake.

The electrical conductivity of the flake is determined by tests for surface resistance or resistivity, in which the conductive flake is mixed in a carrier

paint system, applied as a uniform layer to a glass microscope slide or a structural foam plastic substrate and dried. The surface resistance is determined by placing a pair of flat probes, having equal surface areas, in contact with the surface of the dried conductive coating and recording the resistance with an ohmmeter. The distance between the probes is such that the surface area between the probes is equal to the area of each probe (e.g. probes 2 cm square would be placed with adjacent edges exactly 2 cm apart). The surface resistance is independent of the area of the conductor, as long as the length and width are equal, and is measured in ohms per square, which is a non-dimensional measurement.

In the conductivity tests reported herein, measurements were made using an acrylic resin vehicle as the carrier, with the ratio of metallic pigment to the vehicle, including resin and solvent, being approx. 3 parts metallic pigment to 4 parts vehicle (by weight), the resultant metallic pigment to resin solids ratio being approx. 2.8:1 (by weight).

<u>Example I</u>

This is an example of the production of nickel flake by the process of the invention.

The process was carried out in a cylindrical ball mill 91.5 cm in diameter and 30.5 cm long, provided with 15 internal lifters 3.8 cm wide x 2.5 cm high fastened at 24° spacings over the full cylindrical face of the mill parallel to the cylindrical axis. The mill was charged with 272.2 kg of 0.64 cm diameter steel balls, 7.7 kg of carbonyl nickel powder of average size 2.2 to 3 µm, 34.1 l of 66/3 mineral spirits (a light liquid hydrocarbon mineral spirits similar in viscosity to kerosene and having a specific gravity of 0.771), and 18.2 g of isopropyl tri(dioctylpyrophosphato) titanate. The ball-to-liquid volume ratio was 1.02:1,

the ball-to-powder volume ratio 40:1 and the liquid-to-powder volume ratio 39.3:1. The mill was rotated at 27 rpm, and samples were taken at various milling periods from 0.5 to 2 hours. Each sample was discharged, and following a liquid/solid separation the flake was dried at 149°C using a vacuum of 76.2 cm of mercury, then flushed with a 95%$N_2$-5%$H_2$ stream for 30 minutes and allowed to cool under vacuum.

The flake produced was bright and lustrous. Its particle size distribution (determined by dry screening), average thickness T (determined by a water coverage method on the fraction that passed a sieve having 44 μm openings) and specular reflectance ($R_s$) are set forth in Table I below.

Samples of the dried flake from each run were "annealed" by permitting the temperature to rise to 230°C under vacuum, holding it at 230°C for one hour, under a 95%$N_2$-5%$H_2$ gas stream, and then cooling under vacuum. The surface resistivity of the annealed samples is also shown in Table I.

TABLE I

| Milling Time (h) | Size distribution (μm) Wt. % | | | T (μm) | $R_s$ (%) | Surface Resistivity (ohms/sq.) |
|---|---|---|---|---|---|---|
| | -44 | +44-61 | +61 | | | |
| 0.5 | 96.7 | 1.4 | 1.9 | 1.25 | 26.3 | 0.15 |
| 1.0 | 95.1 | 3.6 | 1.3 | 1.0 | 30.2 | >0.15-<0.2 |
| 1.5 | 93.7 | 5.6 | 0.7 | 0.8 | 39.3 | 0.2 |
| 2.0 | 95.0 | 4.5 | 0.5 | 0.67 | 42.7 | 0.2 |

The results in Table I show that the reflectivity of the product increased with milling time, while the thickness of the flake decreased. Thus after milling for 1.5 h, the nickel flake had a specular reflectance greater than 39%. The resistivity of the flake also increased slightly with milling time.

Portions of the nickel powder that had been

milled for 0.5, 1, 1.5 and 2 h and annealed as described above were also subjected to an accelerated environmental test, comprising subjecting them to steam for 2 h and permitting them to dry in air. The surface resistivity determined after this treatment is shown in Table II.

TABLE II

| Milling Time (h) | Surface resistivity (ohms/sq.) |
|---|---|
| 0.5 | <0.3 |
| 1.0 | <0.3 |
| 1.5 | 0.38 |
| 2.0 | 0.38 |

Although the resistivity was somewhat higher, for all the samples it was still less than 1 ohm/sq., in fact below 0.5 ohm/sq.

Example II

This is an example of the production of stainless steel flake by the process of the invention.

In this example, a ball mill was employed which was 30.5 cm in diameter, 12.7 cm long and is provided with 4 internal lifters 1.3 cm square fastened at 90° spacings over the full cylindrical face of the mill parallel to the cylindrical axis. The mill was charged with 750 grams of atomized Type 316L stainless steel powder of particle size less than 38 µm, steel balls 0.64 cm in diameter, 2 l of 66.3 mineral spirits and 2.0 g of isopropyl tri(dioctylpyrophosphato) titanate. The mill was rotated for 18 hours at 45 rpm, with further additions of titanate being made after 14 h running time. The ball-to-liquid volume ratio was 0.95:1, the ball-to-powder volume ratio 20.4:1 and the liquid-to-powder volume ratio 21.3:1. At the end of the run the mill was discharged and the flake product separated from the liquid by decantation and vacuum dried at 105°C using a vacuum of 76.2 cm of Hg.

The flake product was bright and lustrous, and it appeared satisfactory for use in aesthetic applications such as automotive finishes. The properties are set forth in Table III.

TABLE III

| Size distribution (μm) -44 | +44-61 | +61 | T (μm) | $R_s$ (%) |
|---|---|---|---|---|
| Wt. % | | | | |
| 47.6 | 33.5 | 18.9 | 0.8 | 57.5 |

## Example III

This example shows the advantage of using an organometallic substituted alcohol as lubricant, compared with other lubricants.

Nickel flake were prepared as described in Example I in three tests using three different lubricants: oleic acid (A), cetyl alcohol (B) and isopropyl tri(dioctylpyrophosphato) titanate (C). Samples were dried for one hour in a vacuum oven to remove mineral spirits, and values determined for average thickness (T), specular reflectance (Rs), particle size and resistivity are shown in Table IV.

TABLE IV

| Lubricant | Milling Time (min.) | Size distribution (μm) -44 | +44-61 | +66 | T (μm) | $R_s$ (%) | Surface Resistivity (ohms/sq.) |
|---|---|---|---|---|---|---|---|
| | | Wt. % | | | | | |
| A | 50-70 | 99.8 | 0.2 | 0.0 | 1.6 | 27.5 | 1.8 |
| B | 60 | 98.1 | 1.7 | 0.2 | 1.1 | 25.7 | 1.5 |
| C | 60 | 95.1 | 3.6 | 1.3 | 1.0 | 30.2 | 0.6 |

The results in Table IV show that in the as-dried condition there is considerable improvement in both reflectivity and conductivity when the titanate lubricant is used in accordance with this invention.

The conductivity of the flake made using the titanate lubricant could be further and markedly improved by an annealing step. In Table V the surface

resistivity obtained in the "as-dried" condition and in the annealed condition are compared, and the annealing treatment required (ATR) to minimize surface resistivity is given. In addition a sink test was performed on the annealed samples, as follows: a 70 mm diameter x 50 mm high crystallizing dish was filled with 100 ml of distilled water. An 0.5 g sample of annealed flake was spread on the surface of the water and its sinking behaviour was observed.

TABLE V

| Lubricant | Milling Time (min.) | Surface Resistivity (ohm/sq.) As-dried | Annealed | ATR | Sinking Behaviour in $H_2O$ (Annealed) |
|---|---|---|---|---|---|
| A | 50-70 | 1.8 | 0.8 | D | delayed - heavy surface residual and rolling |
| B | 60 | 1.5 | 0.2-0.6 | D | " " " " |
| C | 60 | 0.6 | 0.15-0.2 | E | immediate and complete |

D = At 315°C for approx. 5 hrs. in 95%$N_2$-5%$H_2$/cooled in 95%$N_2$-5%$H_2$.

E = Heated to 230°C under vacuum/1 hr. in 95%$N_2$-5%$H_2$/cooled under vacuum.

These results show a marked improvement in conductivity of the flake prepared with the titanate lubricant of the present invention, and that the annealing treatment required to obtain this improvement was markedly less severe than for the samples prepared with oleic acid or cetyl alcohol.

The results of the sink test matched the resistivity tests. That is, the samples of flake prepared with titanate were observed to sink immediately and completely. It is believed that immediate sinking denotes virtually total removal of the residual lubricants, while delayed sinking with heavy surface residuals indicates retained lubricant in the flake. This may be at least in part responsible for the improved

conductivity of the flake prepared in accordance with the present invention.

The yields of flake prepared with oleic acid and cetyl alcohol, respectively, and annealed essentially under condition D of Table V are poor and generally less than 50%, e.g. about 30%. The poor yield can be attributed to balling and agglomeration of the flake. Flake prepared with a titanate lubricant and annealed essentially under condition E of Table V can be produced in yields of no less than 95% or even as high as 98-99%.

Example IV

This example shows the effect of various annealing atmospheres on the surface resistivity of nickel flake prepared with a titanate lubricant of this invention.

Samples of nickel flake produced as described in Example I and milled for 1 hour were tested for surface resistivity in the "as-dried" condition and after heating under various atmospheres at an elevated temperature for 15 minutes, then cooling under the atmosphere of treatment. Typical results are shown in Table VI.

TABLE VI

| Treatment | Temp. °C | Surface Resistivity (ohms/sq.) |
|---|---|---|
| As-dried | 90 | 0.6 |
| Argon | 315 | 0.8 |
| Vacuum | 150 | 0.6 |
| $95\%N_2-5\%H_2$ | 315 | 0.2 |

These results show the marked improvement produced by a reducing atmosphere during anneal. However, it is noted that all samples show a surface resistance of less than 1 ohm/sq.

Example V

This example shows the advantage of using an organometallic substituted alcohol as lubricant in

making stainless steel flake, compared with other lubricants.

Three samples of stainless steel flake were produced using essentially the processing conditions as described in Example II, except that all samples were processed for approximately 18 hours and a different lubricant was used for each sample: stearic acid (F), cetyl alcohol (B) and isopropyl tri(dioctylpyrophosphato) titanate (C). The samples were examined "as-dried" to remove mineral spirits. Particle size, average thickness (T), and specular reflectance ($R_s$) are shown in Table VII.

TABLE VII

| Lubricant | Size distribution (µm) -44 | +44-61 | +61 | T (µm) | $R_s$ (%) |
|---|---|---|---|---|---|
| | Wt. % | | | | |
| F | 68.2 | 11.6 | 20.2 | 0.7 | 40.7 |
| B | 80.1 | 15.0 | 4.9 | 0.8 | 52.5 |
| C | 47.6 | 33.5 | 18.9 | 0.8 | 57.7 |

It will be seen that the highest specular reflectivity (greater than 53%) is obtained with the titanate lubricant according to the invention.

0097017

## Claims

1. A process for producing metal flake by wet ball milling a powder of the metal in the presence of a lubricant in a mobile liquid system, characterised in that the mobile liquid system contains as lubricant an organometallic substituted alcohol that is at least partially soluble in the liquid system, in a small amount effective to inhibit welding of the metal particles.

2. A process according to claim 1, characterised in that the metal-containing part of the organometallic compound comprises a metal having a valency different from that of the metal being milled.

3. A process according to claim 2, characterised in that the metal of the organometallic compound is titanium, zirconium, hafnium, tantalum, vanadium, silicon, lithium, tin or lead.

4. A process according to claim 3, characterised in that the organometallic compound is a titanate.

5. A process according to claim 4, characterised in that the organometallic compound is isopropyl tri(dioctylpyrophosphato) titanate.

6. A process according to any preceding claim, characterised in that the organometallic compound is present in an amount of from 0.1 to 1% by weight of the powder being milled.

7. A process according to any preceding claim, characterised in that the mobile liquid is mineral spirits.

8. A process according to any preceding claim, characterised in that the metal flake is dried by heating under vacuum in the temperature range from 80 to 200°C to remove the mobile liquid.

9. A process according to any preceding claim, characterised in that the metal is stainless steel or nickel.

10. A process according to claim 8, characterised in that the flake is of a conductive metal and that the dried flake is annealed in a reducing atmosphere at a temperature below its sintering temperature.

11. A process according to claim 10, characterised in that the metal is nickel.

12. Stainless steel flake powder, characterised in that it has an average thickness of less than 1 µm and, in the dried condition, a specular reflectance of greater than 53%.

13. Nickel flake powder, characterised in that it has an average thickness of less than 1 µm, and, in the dried condition, a specular reflectance of greater than 39%.

14. Nickel flake powder, characterised by a surface resistivity in the dried condition equivalent to less than 1 ohm/sq, based on the conductivity tests described herein.

15. Nickel flake powder, characterised by a surface resistivity in the annealed condition equivalent to less than 1 ohm/sq, based on the conductivity tests described herein.

16. Nickel flake powder according to claim 15 having a surface resistivity equivalent to less than 0.5 ohm/sq, based on the conductivity tests described herein.